# FASCICULE DE BREVET EUROPEEN

(11) **EP 3 718 310 B1**
(45) Date de publication et mention de la délivrance du brevet: **13.07.2022**
(21) Numéro de dépôt: 18822420.8
(22) Date de dépôt: 13.11.2018
(51) Int. Cl.: H04Q 3/00, H04L 65/00

(54) **PROCÉDÉ DE TRAITEMENT D'UN APPEL ENTRANT DANS UN RÉSEAU DE TÉLÉCOMMUNICATIONS ET SERVEUR TAS LE METTANT EN OEUVRE**
VERFAHREN ZUR VERARBEITUNG EINES EINGEHENDEN ANRUFS IN EINEM TELEKOMMUNIKATIONSNETZWERK UND TAS-SERVER, DERDERSELBEN VERWENDET
METHOD OF PROCESSING AN INCOMING CALL IN A TELECOMMUNICATIONS NETWORK AND TAS SERVER USING THE SAME

(30) Priorité: 30.11.2017 FR 1761448
(43) Date de publication de la demande: 07.10.2020
(73) Titulaire: ORANGE, 92130 Issy-les-Moulineaux (FR)
(72) Inventeur: BOUVET, Bertrand, 92326 Châtillon Cedex (FR)
(74) Mandataire: Cabinet Beau de Loménie
(86) Numéro de dépôt international: PCT/FR2018/052811
(87) Numéro de publication internationale: WO 2019/106253

(56) Documents cités:
- WO-A1-2013/121158
- FR-A1- 2 882 482
- JIH-WEI TSAI ET AL: "The technique of IMS Sh interface and its NGN LBS application", COMMUNICATION TECHNOLOGY (ICCT), 2010 12TH IEEE INTERNATIONAL CONFERENCE ON, IEEE, PISCATAWAY, NJ, USA, 11 novembre 2010 (2010-11-11), pages 599-602, XP031849982, DOI: 10.1109/ICCT.2010.5688932 ISBN: 978-1-4244-6868-3

## Description

### Arrière-plan de l"invention

L'invention se situe dans le contexte des réseaux de télécommunications et plus précisément dans les réseaux de télécommunications offrant des services de Réseau Intelligent.

On rappelle que les services de Réseau Intelligent (ou services RI) sont des services personnalisés d'un opérateur qui s'appliquent à des appels dont la signalisation est normalisée. Un exemple se trouve dans FR2882482.

On distingue généralement ces services de réseau intelligent RI des services MMTel, solution standardisée du 3GPP pour fournir des services de téléphonie vocale, vidéo et autres sur les réseaux cellulaires 2G/3G/4G/5G.

L'invention s'intéresse plus particulièrement aux conditions de déclenchement des services Terminating d'un RI sur détection d'un appel entrant.

On rappelle qu'un service Terminating d'un RI (en français «service appelé d'un RI ») désigne notamment l'interception de toute ou partie des messages de signalisation d'une session reçue par le commutateur d'entrée (GMSC pour Gateway Mobile Switch Center) ou serveur d'application (TAS pour Telephony Application Server) du réseau nominal de l'utilisateur appelé pour la transmettre partiellement ou en globalité après adaptation protocolaire vers une entité de traitement de service RI qui est toujours localisée dans le réseau nominal de l'utilisateur appelé et qui se charge d'appliquer une logique de service spécifique avant de redonner le contrôle au commutateur d'entrée ou serveur d'application sur cette session.

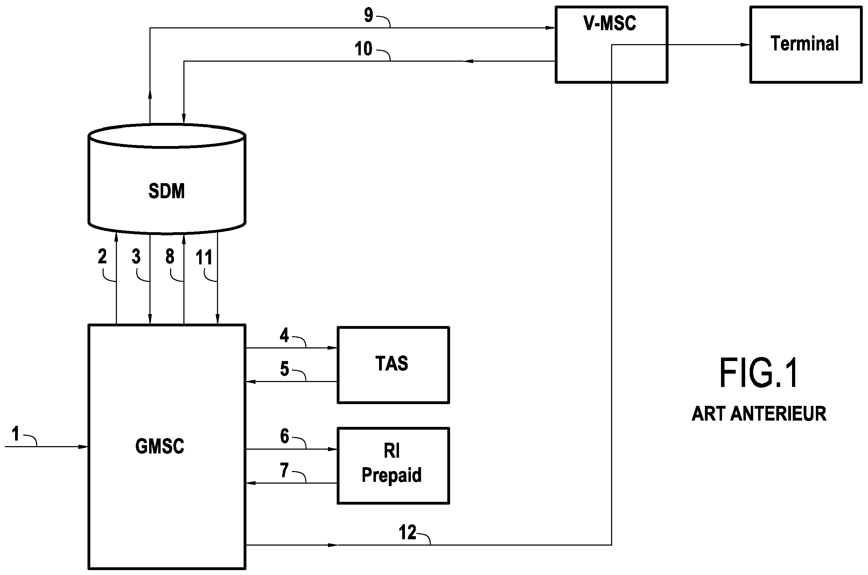

Les figures 1 à 3 qui vont maintenant être décrites illustrent le traitement d'un appel entrant dans un réseau mobile mettant en œuvre un service Terminating de RI conformément à l'état actuel de la technique. A titre d'illustration, le service Terminating de RI décrit dans ces figures est le service Prepaid (en français « prépayé ») de gestion du mode prépayé.

La figure 1 présente le traitement d'un appel destiné à un utilisateur en mode prépayé lorsque le terminal appelé se trouve sous couverture cellulaire 2G/3G mais n'est pas enregistré au niveau SIP.

On rappelle qu'un appel entrant ISUP (ISDN Signalling User Part) ou (Bearer Independent Call Control) est présenté (étape (1)), lorsqu'il arrive dans le réseau nominal, à une entité GMSC (Gateway Mobile Switch Center). Ce message comporte le numéro MSISDN du terminal appelant et le numéro MSISDN du terminal appelé.

Au cours d'une étape (2), l'entité GMSC envoi une requête MAP SRI (Send Routing Information) à une entité SDM (Service Data Management) pour savoir où se situe le terminal appelé. On rappelle que le SDM intègre le HLR (Home Location Register) et le serveur HSS (Home Subscriber Server).

Au cours d'une étape (3), le SDM vérifie qu'il y a bien un profil de service utilisateur enregistré pour ce numéro appelé MSISDN. Si tel est le cas, le SDM retourne des informations au GMSC afin que celui-ci route l'appel vers la fonction SCC-AS (Service Call Continuity Application Server) du serveur TAS. Ces informations comportent notamment l'adresse de la fonction SCC-AS, la marque de réseau intelligent T-CSI (Terminating Camel Subscription Information), un service KEY, le point de déclenchement DP12 et le traitement par défaut (en anglais « default handling ») CONTINUE.

On rappelle qu'une marque de service de RI définit l'ensemble des paramètres de déclenchement de ce RI, dont (i) l'adresse de la plateforme gsm-SCF (Global System Mobile - Service Control Function) de traitement de la logique de service et (ii) la clé de service (en anglais « Service Key ») identifiant la logique de service qui doit être invoquée dans cette plateforme et (iii) TDP (Trigger Détection Point) list identifiant le point de détection de l'automate d'appel BCSM (Basic Call State Machine) sur lequel le déclenchement du service RI doit intervenir et (iiii) le Default Call Handling qui indique si l'appel doit être poursuivi ou libéré dans le cas d'une erreur lors d'un dialogue entre le gsm-SSF (Global System Mobile - Service Switching Fonction) et le gsm-SCF (Global System Mobile - Service Control Fonction).

Le GMSC déclenche via sa fonction gsm-SSF le routage de l'appel vers la fonction SCC-AS du serveur TAS qui joue le rôle de gsm-SCF (étape (4) et le serveur TAS vérifie si le numéro MSISDN de l'appelé est enregistré au niveau SIP.

Dans le scénario de la figure 1, le terminal appelé n'est pas enregistré au niveau SIP. Autrement dit le terminal appelé n'est pas sous couverture 4G (VoLTE) ou Wifi(VoWiFi) mais attaché dans un réseau cellulaire 2G/3G. Par conséquent, le serveur TAS répond que le numéro MSISDN du terminal appelé n'est pas enregistré dans le réseau cœur IMS, et demande (étape (5)) au GMSC de poursuivre l'appel en mode circuit via la réponse CAMEL CONTINUE.

A l'étape (6), le GMSC ayant reçu le profil de l'utilisateur à l'étape (3), détermine que le terminal appelé est en mode prépayé du fait qu'il est actuellement localisé dans un pays visité et que donc la terminaison d'appel entre le pays nominal et le pays visité doit lui être facturé. Il consulte, via sa fonction gsm-SSF, la plateforme de réseau intelligent PREPAID pour vérifier la balance du compte de l'utilisateur du terminal appelé. La plateforme de réseau intelligent PREPAID répond (étape 7), en fonction de l'état du compte, avec un message de type :
- CONTINUE pour continuer l'appel si l'état du compte le permet ; ou
- CONNECT pour rediriger l'appel vers une ressource vocale configurée pour indiquer à l'utilisateur comment recharger son compte prépayé ;
- RELEASE pour interrompre l'appel.

Si la balance du compte prépayé le permet, le GSMC interroge (étape (8)) l'entité HLR pour obtenir un numéro routable au niveau international (en anglais « Routable Number ») du terminal appelé. Le SDM envoie (étape (9)) une requête vers le commutateur V-MSC (Visited Mobile Switch Center) qui avait précédemment téléchargé le profil de l'utilisateur auprès du SDM lorsque le terminal appelé s'est accroché en 2G, 3G auprès du V-MSC.

A l'étape (10), le V-MSC délivre au SDM le numéro routable du terminal appelé. On rappelle que ce numéro routable au niveau international est un numéro délivré de façon temporaire par le V-MSC, parmi un ensemble de numéros gérés par ce V-MSC.

A l'étape (11), le SDM fournit ce numéro routable au GMSC qui route (étape (12)) l'appel en ISUP/BICC jusqu'au V-MSC sur lequel est attaché le terminal appelé. Le V-MSC retrouve le terminal dans les cellules qu'il gère par un mécanisme de paging et présente l'appel au terminal appelé.

L'appel est ensuite supervisé par la plateforme de RI PREPAID et si le crédit de communication de l'utilisateur est épuisé, le GMSC déclenche alors la déconnection du terminal appelé et envoie un message d'interruption d'appel (de type RELEASE) au terminal appelant.

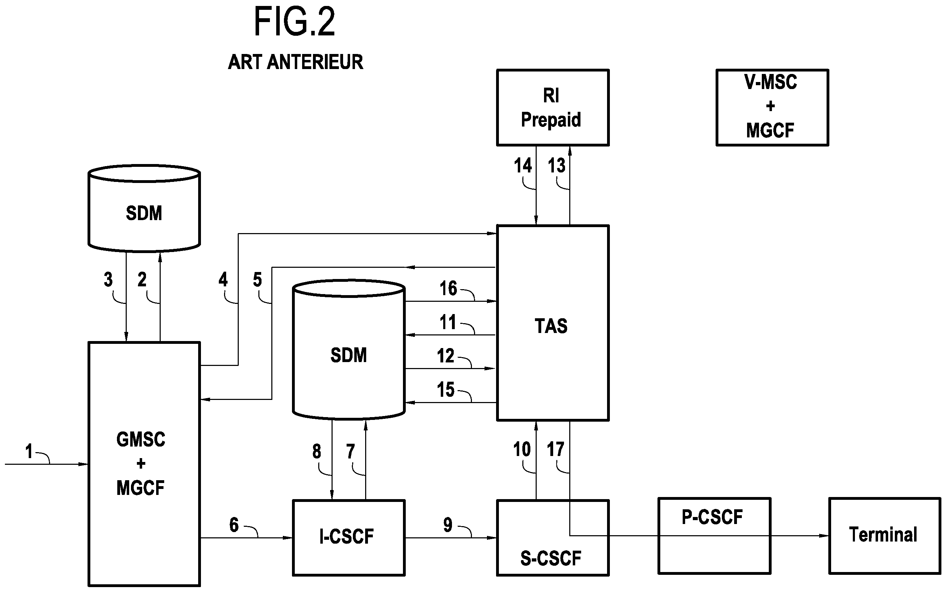

La figure 2 présente le routage d'un appel entrant vers un terminal appelé lorsque le terminal appelé est connecté en mode paquet et sous couverture cellulaire 2G/3G, conformément à l'état de la technique.

Dans ce scénario, si le terminal appelé est enregistré en VoWiFi en parallèle de sa connexion 2G/3G, donc en SIP, ce terminal appelé est enregistré dans le serveur TAS.

Par conséquent, lorsque la fonction SCC-AS du serveur TAS est interrogée par le GMSC à l'étape (4), le serveur TAS répond à l'étape (5) au GMSC en protocole CAP « CONNECT » en utilisant un identifiant de routage spécifique tel qu'un préfixe devant le numéro MSISDN appelé. Le GMSC route alors sur la base de ce préfixe (étape (6)) l'appel vers le I-CSCF (Interrogating Call State Control Function) en protocole SIP selon le mécanisme de suppression de préfixe connu de l'homme du métier. Le GMSC, via sa fonction MGCG (Media Gateway Control Function) envoie à cet effet à l'entité I-CSCF un message SIP INVITE comportant le numéro MSISDN du terminal appelé.

Aux étapes (7) et (8), l'entité I-CSCF interroge la partie HSS du SDM pour obtenir l'adresse de l'entité S-CSCF (Serving - Call State Control Function) sur laquelle est enrgistré le terminal appelé, via son numéro MSISDN.

A l'étape (9), le I-CSCF route l'appel vers ce S-CSCF. On rappelle que le S-CSCF a précédemment téléchargé du HSS le profil IMS du terminal appelé lors de la phase d'enregistrement SIP Initial de ce terminal.

Le S-CSCF déclenche ensuite (étape (10)) l'envoi d'un message INVITE vers le serveur TAS.

A l'étape (11), le serveur TAS demande au SDM si l'utilisateur du terminal appelé a des marques de réseau intelligent RI Terminating. A l'étape (12) le SDM répond que l'utilisateur a effectivement des marques de RI PREPAID.

A l'étape (13), la fonction IM-SSF (IP Multimedia - Service Switching Function) du serveur TAS déclenche le service de RI Terminating. La plateforme de réseau intelligent confirme (étape (14)), sur la base du numéro MSISDN, que le compte prépayé de l'utilisateur est suffisamment crédité pour que l'appel soit autorisé.

A l'étape (15), la fonction T-ADS (Terminating Domain Access Selection) du serveur TAS réinterroge le SDM pour déterminer le domaine de routage de l'appel entrant soit vers le mode paquet PS VoLTE ou VoWiFi soit vers le mode circuit 2G/3G.

Le terminal appelé étant enregistré en VoWiFi, le SDM indique (étape (16)) de router l'appel en mode PS (en anglais « Packet Switch »), via le cœur IMS.

Le serveur TAS envoie (étape (17)), le message INVITE vers le S-CSCF ; le S-CSCF route l'appel vers le P-CSCF (Proxy Call State Control Function) et le P-CSCF route l'appel vers le terminal appelé. L'appel est ensuite supervisé par la plateforme de RI PREPAID et si le crédit de communication de l'utilisateur est épuisé, le TAS déclenche alors la déconnection du terminal appelé et envoie un message d'interruption d'appel (de type BYE) vers le MGCF du GMSC qui lui-même interrompt l'appel avec l'appelant au terminal appelant en envoyant un message ISUP/BICC (de type Release).

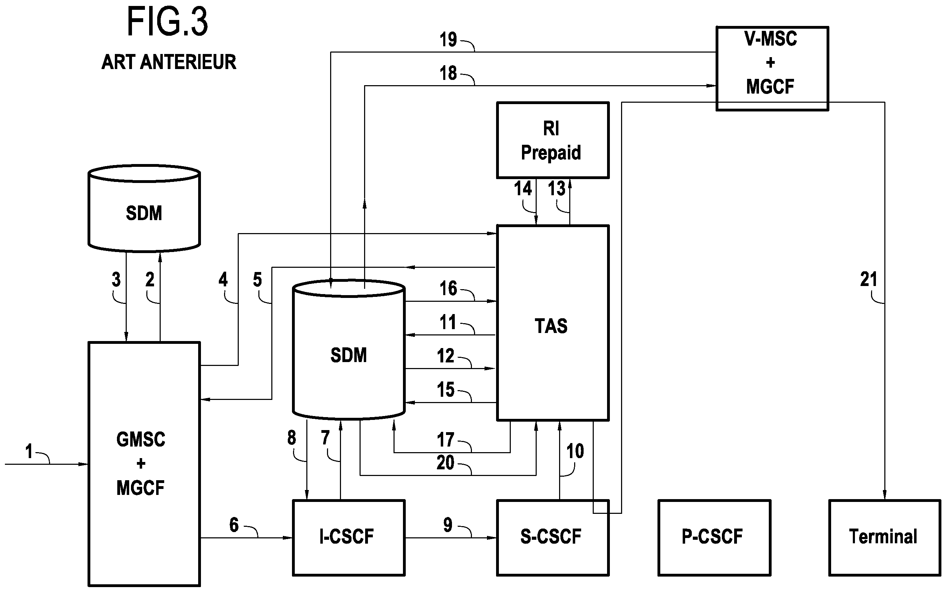

En référence à la figure 3, on suppose que le terminal appelé, précédemment enregistré en cœur de réseau IMS, a perdu la couverture paquet. C'est par exemple le cas d'un terminal en VoWiFi qui vient de perdre le lien avec la point d'accès WiFi mais qui est toujours enregistré en SIP dans le S-CSCF et dans le TAS, typiquement pendant une durée de une heure, correspondant à la durée EXPIRES entre deux enregistrements REGISTER subséquents.

Dans le cas d'un appel entrant destiné à ce terminal, à l'étape (15), la fonction T-ADS du serveur TAS détermine que le domaine Terminating du terminal appelé est le domaine circuit et que l'appel doit être routé en mode circuit.

Dans ces conditions, le serveur TAS obtient l'adresse de routage international du terminal appelé en interrogeant le SDM (étapes (17) à (20)) puis route (étape (21)) le message INVITE vers le S-CSCF. Le S-CSCF envoie le message INVITE vers le MGCF du V-MSC qui effectue la traduction SIP vers ISUP/BICC et l'appel est routé depuis le V-MSC vers le terminal appelé de manière classique.

Il ressort de la description des figures 1 à 3, que les services de RI Terminating sont systématiquement déclenchés, indépendamment de l'état de connexion du terminal de l'utilisateur appelé.

Cette situation n'est pas satisfaisante. L'invention vise par conséquent un mécanisme permettant à un opérateur de mettre en place une offre de service Terminating différentiée.

### Objet et résumé de l'invention

Ainsi et selon un premier aspect, l'invention vise un procédé de traitement d'un appel entrant destiné à un terminal appelé dans un réseau de télécommunications de type IMS. Ce procédé est mis en œuvre par un serveur TAS et comporte :
- une étape d'interrogation d'une entité SDM pour déterminer si le profil de services de l'utilisateur associé au terminal appelé a des marques de services de RI Terminating ;
- une étape d'interrogation d'une entité SDM pour déterminer si le domaine de routage à utiliser pour router l'appel vers le terminal appelé est de type circuit ou paquet ;
- si ledit domaine de routage est de type paquet, une étape pour déterminer si le terminal appelé est effectivement joignable en mode paquet, et le cas échéant, via quel type de réseau d'accès ; et
- si le profil de services dudit utilisateur a des marques de RI Terminating, une étape permettant de différentier le service de RI Terminating rendu à l'utilisateur du terminal appelé en fonction du type de réseau d'accès du terminal appelé.
- une étape de routage de l'appel vers le terminal appelé.

Corrélativement, l'invention concerne un serveur TAS configuré pour traiter un appel entrant destiné à un terminal appelé dans un réseau IMS. Ce serveur comporte :
- une unité configurée pour interroger une entité SDM pour déterminer si le profil de services de l'utilisateur associé au terminal appelé a des marques de services de RI Terminating ;
- une unité configurée pour interroger une entité SDM pour déterminer si le domaine de routage à utiliser pour router l'appel vers le terminal appelé est de type circuit ou paquet ;
- une unité de vérification de la joignabilité du terminal appelé configurée pour déterminer, lorsque le domaine de routage est de type paquet, si le terminal appelé est effectivement joignable en mode paquet, et si c'est le cas, via quel type de réseau d'accès ; et
- une unité de différentiation de service de RI Terminating configurée, dans le cas où ledit utilisateur a des marques de services de RI Terminating, pour permettre de différentier le service de RI Terminating rendu à l'utilisateur du terminal appelé en fonction du type de réseau d'accès du terminal appelé ; et
- une unité de routage de l'appel vers le terminal appelé.

Ainsi, et d'une façon générale, l'invention propose de déterminer le type de réseau d'accès auquel est attaché un terminal appelé avant de déclencher une logique de service de RI Terminating, et de différentier le service Terminating de RI à rendre à l'utilisateur de ce terminal en fonction du type de réseau d'accès.

L'invention propose par conséquent d'anticiper la fonction T-ADS, pour activer, désactiver ou adapter une logique de service de RI Terminating.

Dans une première variante de réalisation, l'étape permettant de différentier le service de RI Terminating rendu à l'utilisateur du terminal appelé en fonction du type de réseau d'accès consiste à déclencher ou non le service de RI Terminating en fonction du type de réseau d'accès du terminal appelé.

Dans une deuxième variante de réalisation, l'étape permettant de différentier le service de RI Terminating rendu à l'utilisateur du terminal appelé en fonction du type de réseau d'accès comporte le déclenchement systématique du service RI Terminating en envoyant à la plateforme d'exécution du service de RI le type de réseau d'accès du terminal appelé, la plateforme étant configurée pour mettre en œuvre une logique du service différentiée en fonction du type de réseau d'accès.

Dans un mode particulier de réalisation de l'invention, l'étape pour déterminer si le terminal appelé est effectivement joignable en mode paquet et le cas échéant, via quel type d'accès, comporte :
- l'envoi d'un message SIP au terminal appelé, par exemple un message de type SIP OPTIONS ;
- l'attente d'une réponse, pendant une durée prédéterminée, pour déterminer si ledit terminal appelé est joignable ; et en cas de réponse :
- la détermination du type de réseau d'accès à partir d'un champ SIP PANI (Private Access Network Information) compris dans la réponse.

Dans un mode particulier de réalisation de l'invention, pour différentier le service de RI Terminating rendu à l'utilisateur du terminal appelé, on prend en outre en compte :
- lorsque le terminal appelé est joignable sous couverture cellulaire, le code pays, le code opérateur ou l'identifiant de cellule normalisé compris dans le champ SIP PANI ;
- lorsque le terminal appelé est joignable en VoWiFi, la localisation du point d'accès WiFi auquel est connecté le terminal appelé, la localisation du point d'accès étant obtenue à partir de l'adresse IP et/ou de l'adresse MAC dudit point d'accès.

L'invention permet ainsi à un opérateur de décider notamment de déclencher, de ne pas déclencher, ou de déclencher un service de RI Terminating différentié :
- selon que le terminal appelé est attaché à un réseau cellulaire (2G, 3G, 4G) ou en WiFi ;
- selon le type de réseau cellulaire par exemple 2G/3G versus 4G ; voire même,
- selon le pays, l'opérateur ou la cellule du réseau dans lequel se trouve le terminal appelé,
- selon la localisation du réseau WiFi utilisé par le terminal appelé.

L'invention peut notamment être utilisée pour ne pas déclencher la supervision d'un appel par une plateforme de RI Terminating lorsque le terminal appelé est effectivement sous couverture WiFi.

Ce mode de réalisation est particulièrement avantageux dans le cas d'un service de RI PREPAID car il permet à un opérateur de ne pas diminuer les crédits de communication d'un utilisateur en mode prépayé, lorsque celui-ci reçoit un appel en situation d'itinérance à l'étranger, alors que son terminal est en VoWiFi.

Les caractéristiques et avantages du serveur TAS selon l'invention sont identiques aux caractéristiques et avantages du procédé de traitement d'un appel entrant décrits précédemment.

Par conséquent :
- dans la première variante de réalisation, l'unité de différentiation de service de RI Terminating du serveur TAS selon l'invention est configurée pour déclencher ou non le service RI Terminating en fonction du type de réseau d'accès du terminal appelé.
- dans la deuxième variante de réalisation, l'unité de différentiation de service RI Terminating du serveur TAS selon l'invention est configurée pour déclencher systématiquement le service RI Terminating en envoyant à la plateforme de traitement du service RI le type de réseau d'accès du terminal appelé, la plateforme étant configurée pour mettre en œuvre une logique du service différentiée en fonction du type de réseau d'accès.

Selon un troisième aspect, l'invention vise aussi un système comportant :
- un serveur TAS tel que mentionné précédemment ; et
- une plateforme de RI configurée pour mettre en œuvre une logique du service terminating en fonction du type de réseau d'accès reçu du serveur TAS.

Dans un mode particulier de réalisation, les différentes étapes du procédé de traitement d'un appel entrant selon l'invention sont déterminées par des instructions de programmes d'ordinateurs.

En conséquence, l'invention vise aussi un programme d'ordinateur, sur un support d'informations, ce programme comportant des instructions adaptées à la mise en œuvre des étapes d'un procédé de traitement d'un appel entrant selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 déjà décrite présente le traitement d'un appel entrant destiné à un utilisateur bénéficiant d'un service en mode prépayé conformément à l'état actuel de la technique, lorsque le terminal appelé est sous couverture cellulaire 2G/3G et n'est pas enregistré au niveau SIP ;
- la figure 2 déjà décrite présente le routage d'un appel entrant vers un terminal appelé lorsque le terminal appelé est connecté en mode paquet et sous couverture cellulaire 2G/3G, conformément à l'état de la technique ;
- la figure 3 déjà décrite illustre le traitement de l'appel entrant lorsque le terminal appelé, précédemment enregistré en cœur de réseau IMS, a perdu la couverture paquet ; conformément à l'état de la technique ;
- la figure 4 représente de façon schématique un serveur TAS conforme à un mode particulier de réalisation de l'invention ;
- la figure 5 illustre l'architecture matérielle d'un serveur TAS conforme à un mode particulier de réalisation de l'invention ;
- la figure 6 représente sous forme d'organigramme les principales étapes d'un procédé de traitement d'un appel entrant conforme à l'invention ;
- les figures 7 et 12 représentent deux mécanismes permettant de différentier un service de RI Terminating conformément à l'invention ;
- la figure 8 représente un mécanisme permettant de déterminer si le terminal appelé est effectivement joignable en mode paquet et le cas échéant, via quel type d'accès, conforme à l'invention ;
- la figure 9 illustre un exemple de mise en œuvre de l'invention lorsque le terminal appelé est sous couverture WiFi ;
- la figure 10 illustre un exemple de mise en œuvre de l'invention lorsque le terminal appelé est attaché sur un réseau 4G UTRAN d'un pays étranger ; et
- la figure 11 illustre un exemple de mise en œuvre de l'invention lorsque le terminal appelé a perdu la couverture réseau 4G ou WiFi.

### Description détaillée d'une première variante de l'invention

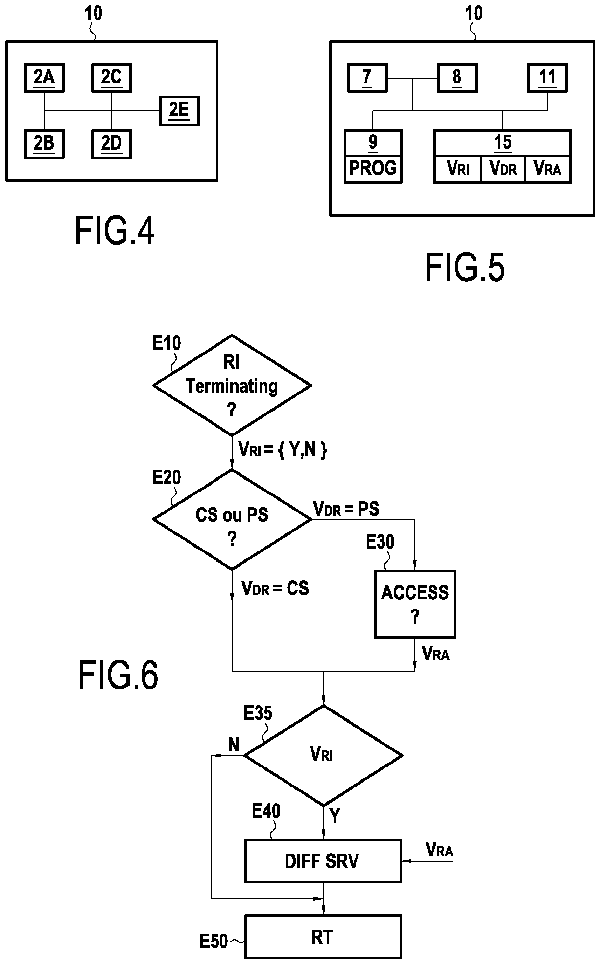

La figure 4 représente un serveur TAS 10 conforme à un mode particulier de réalisation de l'invention. Dans le premier mode de réalisation décrit ici, ce serveur TAS a l'architecture d'un ordinateur, telle qu'illustrée à la figure 5. Elle comprend notamment un processeur 7, une mémoire vive 8, une mémoire morte 9, une mémoire flash non volatile 15 ainsi que des moyens de communication 11. De tels moyens sont connus en soi et ne sont pas décrits plus en détail ici.

La mémoire morte 9 du dispositif de l'entité 10 de gestion de profils d'utilisateurs constitue un support d'enregistrement conforme à l'invention, lisible par le processeur 7 et sur lequel est enregistré ici un programme d'ordinateur PROG conforme à l'invention.

Le programme d'ordinateur PROG définit des modules fonctionnels et logiciels ici, configurés pour mettre en œuvre les étapes d'un procédé de traitement d'un appel entrant. Ces modules fonctionnels s'appuient sur et/ou commandent les éléments matériels 7-11 et 15 de l'entité 10 cités précédemment. Ils comprennent notamment ici, comme illustré sur la figure 4 :
- une unité 2A configurée pour interroger une entité SDM pour déterminer si le profil de services d'un l'utilisateur a des marques de services de RI Terminating ;
- une unité 2B configurée pour interroger une entité SDM pour déterminer si le domaine de routage à utiliser pour router un appel est de type circuit ou paquet ;
- une unité 2C de vérification de la joignabilité du terminal appelé configurée pour déterminer, lorsque ledit domaine de routage est de type paquet, si le terminal appelé est effectivement joignable en mode paquet, et le cas échéant, via quel type de réseau d'accès ;
- une unité 2D de différentiation de service de RI Terminating configurée, dans le cas où l'utilisateur du terminal appelé a des marques de services de RI Terminating, pour permettre de différentier le service de RI Terminating rendu à l'utilisateur du terminal appelé en fonction du type de réseau d'accès du terminal appelé ; et
- une unité 2E de routage de l'appel vers ledit terminal appelé.

Dans un mode de réalisation de l'invention, l'unité 2D de différentiation de service de RI Terminating est configurée pour déclencher ou non ledit service RI Terminating en fonction du type de réseau d'accès.

Dans un autre mode de réalisation de l'invention, l'unité 2D de différentiation de service de RI Terminating est configurée pour déclencher systématiquement le service RI Terminating en envoyant à la plateforme de traitement du service RI le type de réseau d'accès du terminal appelé. Dans ce mode de réalisation, la plateforme de traitement de service RI Terminating est configurée pour mettre en œuvre une logique de service différentiée en fonction du type de réseau d'accès du terminal appelé.

La figure 6 représente sous forme d'organigramme les principales étapes d'un procédé de traitement d'un appel entrant conforme à l'invention.

Ce procédé peut être mis en œuvre par le serveur TAS de la figure 4.

Ce procédé comporte une étape E10 au cours de laquelle le serveur TAS interroge l'entité SDM pour déterminer si le profil de services de l'utilisateur associé audit terminal appelé a des marques de services de RI Terminating. Le résultat de cette interrogation est enregistré dans une variable V_{RI} mémorisée dans la mémoire 15. Cette variable V_{RI} est initialisée à « Y »si le profil de services de l'utilisateur a des marques de services de RI Terminating et à « N » dans le cas contraire.

Au cours d'une étape E20, le serveur TAS interroge une entité SDM pour déterminer le domaine de routage circuit ou paquet à utiliser pour router l'appel vers ledit terminal appelé. Le résultat PS/CS de cette interrogation est enregistré dans une variable V_{DR} mémorisée dans la mémoire 15.

Si ledit domaine de routage est de type paquet, l'étape E20 est suivie par une étape E30 au cours de laquelle le serveur TAS détermine si le terminal appelé est effectivement joignable en mode paquet, et le cas échéant, via quel type de réseau d'accès. Le type de réseau d'accès est enregistré dans une variable V_{RA} mémorisée dans la mémoire 15.

Au cours d'une étape E35, le serveur TAS vérifie si le profil de services de l'utilisateur a des marques de services RI Terminating en fonction du contenu de la variable V_{RI} initialisée à l'étape E10.

Si tel est le cas, le service de RI Terminating est différentié au cours d'une étape E40 en fonction du type de réseau d'accès du terminal appelé mémorisé dans la variable V_{RA}.

Puis l'appel est routé vers le terminal appelé au cours d'une étape E50.

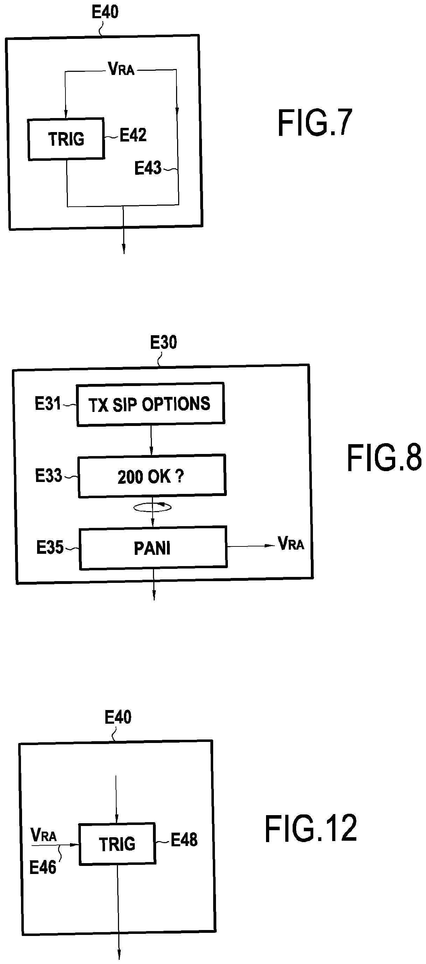

Dans la première variante de réalisation de l'invention, et comme illustré à la figure 7, l'étape E40 permettant de différentier le service de RI Terminating rendu à l'utilisateur du terminal appelé en fonction du type de réseau d'accès consiste à déclencher (étape E42) ou non (E43) le service de RI Terminating en fonction du type de réseau d'accès (variable V_{RA}).

Dans un mode particulier de réalisation, et comme illustré à la figure 8, l'étape E30 pour déterminer si le terminal appelé est effectivement joignable en mode paquet et le cas échéant, via quel type d'accès, comporte :
- l'envoi E31 d'un message SIP au terminal appelé ;
- l'attente E33 d'une réponse, pendant une durée prédéterminée, pour déterminer si ledit terminal appelé est joignable ; et en cas de réponse :
- la détermination E35 dudit type de réseau d'accès (variable V_{RA}) et éventuellement :
   (i) du code pays, du code opérateur ou de l'identifiant de cellule à partir d'un champ SIP PANI compris dans la réponse dans le cas où le terminal appelé est joignable sous couverture cellulaire ; et
   (ii) l'adresse IP et l'adresse MAC du point d'accès WiFi dans le cas où le terminal appelé est joignable en VoWiFI. Dans ce dernier cas, le TAS peut de manière connue consulter une base de géolocalisation d'adresse IP et/ou d'adresse MAC pour retrouver la localisation (pays) du point d'accès WiFi.

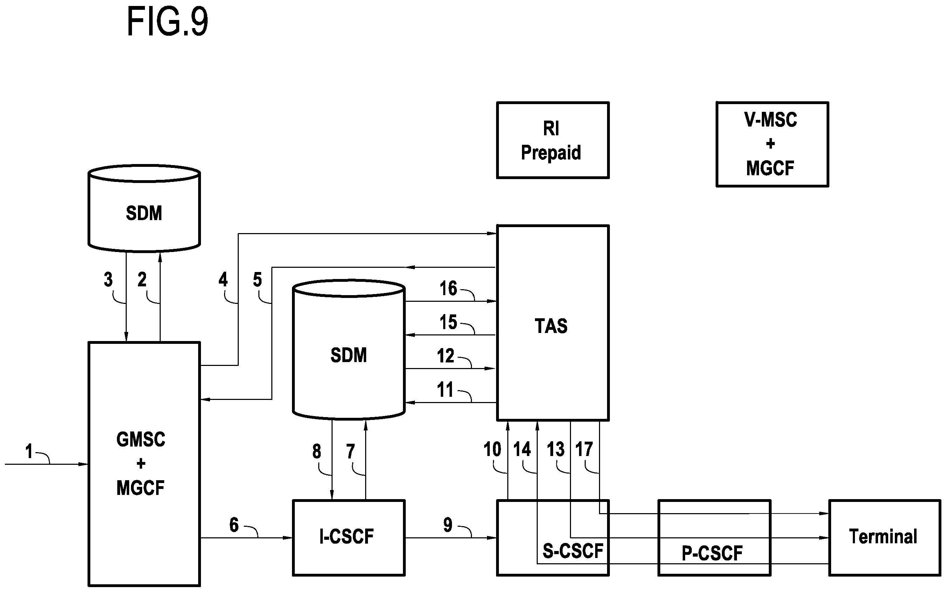

La figure 9 présente un exemple de mise en œuvre de l'invention lorsque le terminal appelé est effectivement sous couverture WiFi.

Conformément à l'invention, avant de déclencher le service RI Terminating Prepaid, le serveur TAS envoie (étape (13)) un message SIP OPTIONS au terminal appelé. Si le terminal appelé répond à ce message (typiquement par une réponse 200 OK), le serveur TAS détermine :
(i) de façon certaine que le terminal appelé est toujours joignable via un domaine de routage de type paquet (en anglais PS, « Packet Switch ») ; et
(ii) le type de réseau d'accès du terminal appelé par analyse du champ PANI compris dans la réponse 200 OK.

Dans l'exemple de la figure 9 le serveur TAS selon l'invention décide de ne pas déclencher le service de réseau intelligent Terminating s'il détermine que le terminal appelé est en VoWiFi.

Ce mode de réalisation est particulièrement avantageux car il permet à l'opérateur de ne pas diminuer les crédits de communication d'un utilisateur en mode prépayé, lorsque celui-ci reçoit un appel en situation d'itinérance à l'étranger, alors que son terminal est en VoWiFI.

Dans le mode de réalisation décrit ici, l'algorithme classique de sélection du domaine de terminaison d'appel s'applique de façon classique aux étapes (15) et (16). Ces étapes confirmeront que le terminal est joignable via le domaine paquet PS mais l'appel ne sera pas supervisé par la logique de réseau RI Terminating. L'algorithme classique de sélection du domaine de terminaison d'appel pourrait tout aussi bien être exécuté avant l'étape (13) de détermination de la joignabilité du terminal appelé via le mode paquet. De même, l'algorithme de sélection du domaine de terminaison d'appel pourrait tout aussi bien ne pas être appliqué, par exemple lorsque le terminal appelé est détecté comme enregistré et joignable en VoWiFi.

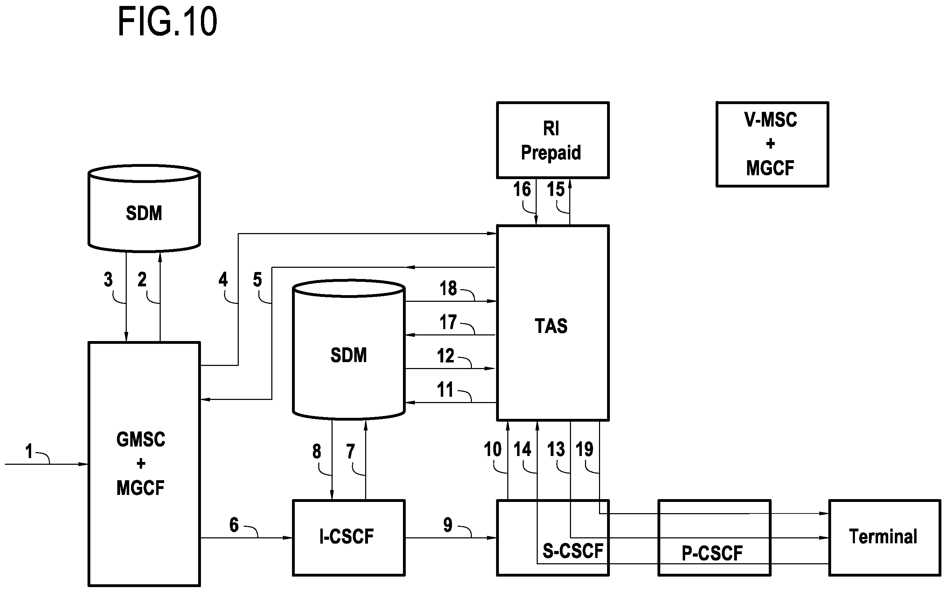

La figure 10 illustre le cas où le serveur TAS détermine à l'étape E30, par analyse du champ SIP PANI reçu dans la réponse 200 OK au message SIP OPTIONS, que le terminal appelé est attaché sur un réseau 4G UTRAN d'un pays étranger via l'identifiant normalisé de cellule MCC (Mobile Country Code).

Dans l'exemple de mise en œuvre de la figure 10, le serveur TAS selon l'invention décide (étapes (15) et (16)) de déclencher le service de réseau intelligent Terminating via sa fonction IM-SSF.

Le serveur TAS peut également décider de déclencher le service de réseau intelligent Terminating s'il reçoit, en réponse du message SIP OPTIONS envoyé au terminal appelé à l'étape (13), une réponse 200OK/486 Busy Here mentionnant un champ SIP PANI avec accès GERAN (2G) ou UTRAN (3G) représentatif du fait que le terminal appelé est attaché à un réseau cellulaire.

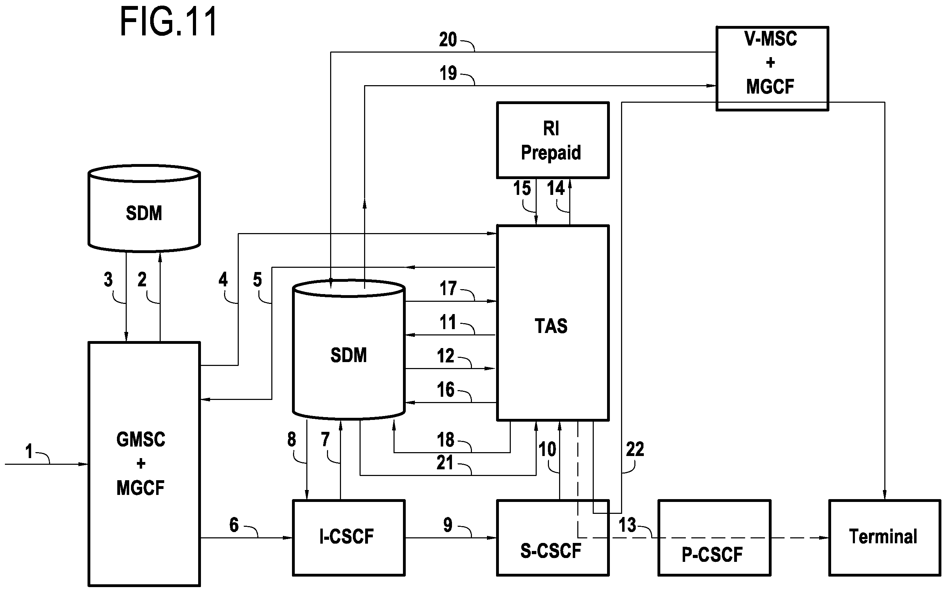

La figure 11 se situe dans le contexte dans lequel le terminal appelé est toujours enregistré au niveau du cœur de réseau IMS mais a perdu la couverture réseau 4G ou WiFi lorsque le serveur TAS lui envoie le message SIP OPTIONS à l'étape (13).

Dans ce cas, le serveur TAS ne reçoit pas de réponse à l'envoi de ce message SIP OPTIONS car le terminal appelé n'est plus joignable. Dans le mode de réalisation décrit ici, le serveur TAS déclenche les services RI Terminating (étapes (14), (15)) et le routage se fait de façon classique par défaut via le réseau 2G, 3G en mode circuit.

### Description d'une deuxième variante de réalisation de l'invention

Dans une deuxième variante de réalisation de l'invention, et comme illustré à la figure 12, l'étape E40 permettant de différentier le service de RI Terminating rendu à l'utilisateur du terminal appelé en fonction dudit type de réseau d'accès comporte le déclenchement systématique (étape E48) du service RI Terminating en envoyant (étape E46) à la plateforme d'exécution du service de RI le type de réseau d'accès du terminal appelé(variable V_{RA}), la plateforme étant configurée pour mettre en œuvre une logique dudit service différentiée en fonction dudit type de réseau d'accès.

### Autres modes de réalisation de l'invention

Dans les modes de réalisation décrits précédemment, le serveur TAS détermine le réseau d'accès du terminal appelé après avoir déterminé que le profil de services de l'utilisateur associé au terminal appelé a des marques de services de RI Terminating. Ces étapes peuvent être inversées mais il est préférable de ne procéder à la détermination du réseau d'accès du terminal appelé que lorsque celui-ci bénéficie de services RI Terminating afin de ne pas surcharger le réseau.

Dans les modes de réalisation décrits précédemment, nous avons décrit le cas d'un appel entrant arrivant depuis un appelant en mode circuit. L'invention s'applique de la même façon en cas d'un appelant du même cœur de réseau IMS ou depuis un autre cœur IMS via un mécanisme d'interconnexion en VoIP.

Dans les modes de réalisation décrits précédemment, la procédure d'ancrage dans le réseau IMS est effectuée lorsque le terminal appelé est enregistré en SIP dans le cœur de réseau IMS. L'invention s'applique de la même façon si la procédure d'ancrage est effectuée systématiquement, autrement dit que le terminal appelé soit enregistré ou pas en SIP en cœur de réseau IMS.

Dans les modes de réalisation décrits précédemment, la procédure d'ancrage dans le réseau IMS est réalisée par marque de réseau intelligent CAMEL. Elle peut aussi se faire par déploiement du mode ICS (IMS Centralized Service) via une interface standardisée I2/I3 depuis les MSC/GMSC vers le cœur IMS.

Ces différentes variantes sont connues de l'homme du métier et standardisées.

Il n'est pas nécessaire que le terminal appelé soit enregistré en SIP en cœur de réseau IMS pour que l'invention soit mise en œuvre. En effet, dès lorsqu'un appel entrant est traité par le cœur de réseau IMS, si le terminal appelé n'est pas enregistré en SIP au niveau du serveur S-CSCF, ce serveur S-CSCF télécharge de lui-même le profil du déclenchement (en anglais « triggering ») du serveur TAS dans le HSS/HLR/SDM, ce profil définissant de router systématiquement tous les messages SIP INVITE entrant et sortant vers le serveur TAS.

## Revendications

1. Procédé de traitement d'un appel entrant destiné à un terminal appelé dans un réseau de télécommunications, le procédé étant mis en œuvre par un serveur Telephony Application Server, TAS, dans un réseau IMS et comportant
- une étape (E10) d'interrogation d'une entité Service Data Management, SDM, pour déterminer si le profil de services de l'utilisateur associé audit terminal appelé a des marques de services de Réseau Intelligent, RI, Terminating ;
- une étape (E20) d'interrogation d'une entité SDM pour déterminer si le domaine de routage à utiliser pour router l'appel vers le terminal appelé est de type circuit ou paquet ; et
- une étape (E50) de routage de l'appel vers ledit terminal appelé ;
ledit procédé étant **caractérisé en ce qu'**il comporte :
- si ledit domaine de routage est de type paquet, une étape (E30) pour déterminer si ledit terminal appelé est effectivement joignable en mode paquet, et le cas échéant, via quel type de réseau d'accès ; et
- si le profil de services dudit utilisateur a des marques de RI Terminating, une étape (E40) permettant de différentier le service de RI Terminating rendu au dit utilisateur du terminal appelé en fonction du type de réseau d'accès du terminal appelé.

2. Procédé de traitement selon la revendication 1, **caractérisé en ce que** ladite étape (E40) permettant de différentier le service de RI Terminating rendu audit utilisateur du terminal appelé en fonction dudit type de réseau d'accès consiste à déclencher (E42) ou non (E43) ledit service de RI Terminating en fonction dudit type de réseau d'accès.

3. Procédé de traitement selon la revendication 1, **caractérisé en ce que** ladite étape (E40) permettant de différentier le service de RI Terminating rendu au dit utilisateur du terminal appelé en fonction dudit type de réseau d'accès comporte le déclenchement (E48) systématique du service RI Terminating en envoyant (E46) à la plateforme d'exécution du service de RI le type de réseau d'accès du terminal appelé, la plateforme étant configurée pour mettre en œuvre une logique dudit service différentiée en fonction dudit type de réseau d'accès.

4. Procédé de traitement selon l'une quelconque des revendications 1 à 3, **caractérisé en ce que** ladite étape (E30) pour déterminer si le terminal appelé est effectivement joignable en mode paquet et le cas échéant, via quel type d'accès, comporte :
- l'envoi (E31) d'un message SIP au terminal appelé ;
- l'attente (E33) d'une réponse, pendant une durée prédéterminée, pour déterminer si ledit terminal appelé est joignable ; et en cas de réponse :
- la détermination (E35) dudit type de réseau d'accès à partir d'un champ SIP PANI compris dans ladite réponse.

5. Procédé de traitement selon la revendication 4, **caractérisé en ce que** pour différentier le service de RI Terminating rendu au dit utilisateur du terminal appelé, on prend en outre en compte, lorsque ledit terminal appelé est joignable sous couverture cellulaire, le code pays, le code opérateur ou l'identifiant de cellule normalisé compris dans ledit champ SIP PANI.

6. Procédé de traitement selon la revendication 4, **caractérisé en ce que** pour différentier le service de RI Terminating rendu au dit utilisateur du terminal appelé, on prend en outre en compte, lorsque ledit terminal appelé est joignable en VoWiFi, la localisation du point d'accès WiFi auquel est connecté ledit terminal appelé, ladite localisation étant obtenue à partir de l'adresse IP et/ou de l'adresse MAC dudit point d'accès.

7. Procédé de traitement selon l'une quelconque des revendications 4 à 6, **caractérisé en ce que** ledit message SIP envoyé (E31) au terminal appelé est un message de type SIP OPTIONS.

8. Serveur TAS configuré pour traiter un appel entrant destiné à un terminal appelé dans un réseau IMS, ledit serveur comportant
- - une unité (2A) configurée pour interroger une entité SDM pour déterminer si le profil de services de l'utilisateur associé audit terminal appelé a des marques de services de RI Terminating ;
- une unité (2B) configurée pour interroger une entité SDM pour déterminer si le domaine de routage à utiliser pour router l'appel vers le terminal appelé est de type circuit ou paquet ; et
- une unité (2E) de routage de l'appel vers ledit terminal ;
ledit serveur TAS étant **caractérisé en ce qu'**il comporte :
- une unité (2C) de vérification de la joignabilité dudit terminal appelé configurée pour déterminer, lorsque ledit domaine de routage est de type paquet, si ledit terminal appelé est effectivement joignable en mode paquet, et le cas échéant, via quel type de réseau d'accès ;
- une unité (2D) de différentiation de service de RI Terminating configurée, dans le cas où ledit utilisateur a des marques de services de RI Terminating, pour permettre de différentier le service de RI Terminating rendu à l'utilisateur du terminal appelé en fonction du type de réseau d'accès du terminal appelé.

9. Serveur TAS selon la revendication 8, **caractérisé en ce que** ladite unité (2D) de différentiation de service de RI Terminating est configurée pour déclencher ou non ledit service RI Terminating en fonction dudit type de réseau d'accès.

10. Serveur TAS selon la revendication 8, **caractérisé en ce que** ladite unité (2D) de différentiation de service RI Terminating est configurée pour déclencher systématiquement le service RI Terminating en envoyant à la plateforme de traitement du service RI le type de réseau d'accès du terminal appelé, la plateforme étant configurée pour mettre en œuvre une logique dudit service différentiée en fonction dudit type de réseau d'accès.

11. Système comportant :
- un serveur TAS selon la revendication 10 ; et
- une plateforme de RI configurée pour mettre en œuvre une logique dudit service terminating en fonction du type de réseau d'accès reçu dudit serveur TAS.

12. Programme d'ordinateur (PROG) comportant des instructions pour l'exécution des étapes d'un procédé de traitement d'appel selon l'une quelconque des revendications 1 à 7 lorsque ledit programme est exécuté par un ordinateur.

13. Support d'enregistrement lisible par un ordinateur sur lequel est enregistré un programme d'ordinateur comprenant des instructions pour l'exécution des étapes du procédé de traitement d'appel selon l'une quelconque des revendications 1 à 7.

## Patentansprüche

1. Verfahren zur Verarbeitung eines eingehenden Anrufs, der für ein angerufenes Endgerät in einem Telekommunikationsnetz bestimmt ist, wobei das Verfahren von einem Server Telephony Application Server, TAS, in einem IMS-Netz durchgeführt wird und aufweist
- einen Schritt (E10) einer Abfrage einer Entität Service Data Management, SDM, um zu bestimmen, ob das Diensteprofil des dem angerufenen Endgerät zugeordneten Benutzers Markierungen von Intelligenten Netzdiensten, RI, Terminating hat;
- einen Schritt (E20) der Abfrage einer Entität SDM, um zu bestimmen, ob die zu verwendende Routing-Domäne, um den Anruf zum angerufenen Endgerät zu routen, von der Art Leitung oder Paket ist; und
- einen Schritt (E50) des Routens des Anrufs zum angerufenen Endgerät;
wobei das Verfahren **dadurch gekennzeichnet ist, dass** es aufweist:
- wenn die Routing-Domäne vom Pakettyp ist, einen Schritt (E30) zur Bestimmung, ob das angerufene Endgerät tatsächlich im Paketmodus erreichbar ist, und ggf. über welchen Typ von Zugangsnetz; und
- wenn das Diensteprofil des Benutzers RI-Markierungen Terminating hat, einen Schritt (E40), der es ermöglicht, den dem Benutzer des angerufenen Endgeräts geleisteten RI-Dienst Terminating abhängig vom Zugangsnetztyp des angerufenen Endgeräts zu differenzieren.

2. Verarbeitungsverfahren nach Anspruch 1, **dadurch gekennzeichnet, dass** der Schritt (E40), der es ermöglicht, den dem Benutzer des angerufenen Endgeräts geleisteten RI-Dienst Terminating abhängig vom Zugangsnetztyp zu differenzieren, darin besteht, den RI-Dienst Terminating abhängig vom Zugangsnetztyp auszulösen (E42) oder nicht (E43).

3. Verarbeitungsverfahren nach Anspruch 1, **dadurch gekennzeichnet, dass** der Schritt (E40), der es ermöglicht, den dem Benutzer des angerufenen Endgeräts geleisteten RI-Dienst Terminating abhängig vom Zugangsnetztyp zu differenzieren, das systematische Auslösen (E48) des RI-Diensts Terminating aufweist, indem der Zugangsnetztyp des angerufenen Endgeräts an die Ausführungsplattform des RI-Diensts gesendet wird (E46), wobei die Plattform konfiguriert ist, eine Logik des Diensts anzuwenden, die abhängig vom Zugangsnetztyp differenziert wird.

4. Verarbeitungsverfahren nach einem der Ansprüche 1 bis 3, **dadurch gekennzeichnet, dass** der Schritt (E30) zur Bestimmung, ob das angerufene Endgerät tatsächlich im Paketmodus erreichbar ist, und ggf. über welchen Zugangstyp, aufweist:
- das Senden (E31) einer Nachricht SIP an das angerufene Endgerät;
- das Erwarten (E33) einer Antwort, während einer vorbestimmten Dauer, um zu bestimmen, ob das angerufene Endgerät erreichbar ist, und im Fall einer Antwort:
- die Bestimmung (E35) des Zugangsnetztyps ausgehend von einem in der Antwort enthaltenen Feld SIP PANI.

5. Verarbeitungsverfahren nach Anspruch 4, **dadurch gekennzeichnet, dass** zur Differenzierung des dem Benutzer des angerufenen Endgeräts geleisteten RI-Diensts Terminating außerdem, wenn das angerufene Endgerät unter zellularer Abdeckung erreichbar ist, der Ländercode, der Betreibercode oder die normierte Zellenkennung berücksichtigt wird, die in dem Feld SIP PANI enthalten ist.

6. Verarbeitungsverfahren nach Anspruch 4, **dadurch gekennzeichnet, dass** zur Differenzierung des dem Benutzer des angerufenen Endgeräts geleisteten RI-Diensts Terminating außerdem, wenn das angerufene Endgerät unter VoWiFi erreichbar ist, die Lokalisierung des WiFi-Zugangspunkts berücksichtigt wird, mit dem das angerufene Endgerät verbunden wird, wobei die Lokalisierung ausgehend von der IP-Adresse und/oder der MAC-Adresse des Zugangspunkts erhalten wird.

7. Verarbeitungsverfahren nach einem der Ansprüche 4 bis 6, **dadurch gekennzeichnet, dass** die an das angerufene Endgerät gesendete Nachricht SIP (E31) eine Nachricht vom Typ SIP OPTIONS ist.

8. Server TAS, der konfiguriert ist, einen für ein angerufenes Endgerät in einem IMS-Netz bestimmten eingehenden Anruf zu verarbeiten, wobei der Server aufweist
- eine Einheit (2A), die konfiguriert ist, eine Entität SDM abzufragen, um zu bestimmen, ob das Diensteprofil des Benutzers, der dem angerufenen Endgerät zugeordnet ist, Markierungen von RI-Diensten Terminating hat;
- eine Einheit (2B), die konfiguriert ist, eine Entität SDM abzufragen, um zu bestimmen, ob die zum Routen des Anrufs zum angerufenen Endgerät zu verwendende Routing-Domäne vom Typ Leitung oder Paket ist; und
- eine Einheit (2E) zum Routen des Anrufs zum Endgerät;
wobei der Server TAS **dadurch gekennzeichnet ist, dass** er aufweist:
- eine Einheit (2C) zur Überprüfung der Erreichbarkeit des angerufenen Endgeräts, die konfiguriert ist, zu bestimmen, wenn die Routing-Domäne vom Pakettyp ist, ob das angerufene Endgerät tatsächlich im Paketmodus erreichbar ist, und ggf. über welchen Zugangsnetztyp;
- eine Einheit (2D) zur Differenzierung eines RI-Diensts Terminating, die konfiguriert ist, in dem Fall, in dem der Benutzer Markierungen von RI-Diensten Terminating hat, es zu ermöglichen, abhängig vom Zugangsnetztyp des angerufenen Endgeräts den dem Benutzer des angerufenen Endgeräts geleisteten RI-Dienst Terminating zu differenzieren.

9. Server TAS nach Anspruch 8, **dadurch gekennzeichnet, dass** die Einheit (2D) zur Differenzierung eines RI-Diensts Terminating konfiguriert ist, abhängig vom Zugangsnetztyp den RI-Dienst Terminating auszulösen oder nicht.

10. Server TAS nach Anspruch 8, **dadurch gekennzeichnet, dass** die Einheit (2D) zur Differenzierung eines RI-Diensts Terminating konfiguriert ist, systematisch den RI-Dienst Terminating auszulösen, indem sie an die Verarbeitungsplattform des Diensts RI den Zugangsnetztyp des angerufenen Endgeräts sendet, wobei die Plattform konfiguriert ist, eine abhängig vom Zugangsnetztyp differenzierte Logik des Diensts anzuwenden.

11. System, das aufweist:
- einen Server TAS nach Anspruch 10; und
- eine RI-Plattform, die konfiguriert ist, eine Logik des Diensts Terminating abhängig vom vom Server TAS empfangenen Zugangsnetztyp anzuwenden.

12. Computerprogramm (PROG), das Anweisungen zur Ausführung der Schritte eines Anrufverarbeitungsverfahrens nach einem der Ansprüche 1 bis 7 aufweist, wenn das Programm von einem Computer ausgeführt wird.

13. Computerlesbarer Speicherträger, auf dem ein Computerprogramm gespeichert ist, das Anweisungen zur Ausführung der Schritte des Anrufverarbeitungsverfahrens nach einem der Ansprüche 1 bis 7 enthält.

## Claims

1. Method for handling an incoming call intended for a called terminal in a telecommunications network, the method being implemented by a telephony application server, TAS, in an IMS network and comprising
- a step (E10) of interrogating a service data management, SDM, entity in order to determine whether the services profile of the user associated with said called terminal has intelligent network, RI, Terminating services marks;
- a step (E20) of interrogating an SDM entity in order to determine whether the routing domain to be used to route the call to the called terminal is of circuit or packet type; and
- a step (E50) of routing the call to said called terminal;
said method being **characterized in that** it comprises:
- if said routing domain is of packet type, a step (E30) for determining whether said called terminal can actually be joined in packet mode and, where applicable, via which type of access network; and
- if the services profile of said user has RI Terminating marks, a step (E40) which makes it possible to differentiate the RI Terminating service provided to said user of the called terminal depending on the type of access network for the called terminal.

2. Handling method according to Claim 1, **characterized in that** said step (E40) which makes it possible to differentiate the RI Terminating service provided to said user of the called terminal depending on said type of access network consists in triggering (E42) or not triggering (E43) said RI Terminating service depending on said type of access network.

3. Handling method according to Claim 1, **characterized in that** said step (E40) which makes it possible to differentiate the RI Terminating service provided to said user of the called terminal depending on said type of access network comprises systematically triggering (E48) the RI Terminating service by sending (E46), to the platform for executing the RI service, the type of access network for the called terminal, the platform being configured to implement a logic of said service, which logic is differentiated depending on said type of access network.

4. Handling method according to any one of Claims 1 to 3, **characterized in that** said step (E30) for determining whether the called terminal can actually be joined in packet mode and, where applicable, via which type of access, comprises:
- sending (E31) an SIP message to the called terminal;
- awaiting (E33) a reply, for a predetermined period, in order to determine whether said called terminal can be joined; and, in the event of a reply:
- determining (E35) said type of access network on the basis of an SIP PANI field included in said reply.

5. Handling method according to Claim 4, **characterized in that**, in order to differentiate the RI Terminating service provided to said user of the called terminal, account is furthermore taken, when said terminal can be joined under cellular coverage, of the country code, the operator code or the normalized cell identifier included in said SIP PANI field.

6. Handling method according to Claim 4, **characterized in that**, in order to differentiate the RI Terminating service provided to said user of the called terminal, account is furthermore taken, when said called terminal can be joined in VoWi-Fi mode, of the location of the Wi-Fi access point to which said called terminal is connected, said location being obtained on the basis of the IP address and/or MAC address of said access point.

7. Handling method according to any one of Claims 4 to 6, **characterized in that** said SIP message sent (E31) to the called terminal is a message of SIP OPTIONS type.

8. TAS configured to handle an incoming call intended for a called terminal in an IMS network, said server comprising
- a unit (2A) configured to interrogate an SDM entity in order to determine whether the services profile of the user associated with said called terminal has RI Terminating services marks;
- a unit (2B) configured to interrogate an SDM entity in order to determine whether the routing domain to be used to route the call to the called terminal is of circuit or packet type; and
- a unit (2E) for routing the call to said terminal;
said TAS being **characterized in that** it comprises:
- a unit (2C) for checking whether said called terminal can be joined, configured to determine, when said routing domain is of packet type, whether said called terminal can actually be joined in packet mode and, where applicable, via which type of access network;
- a unit (2D) for differentiating RI Terminating services which is configured, in the event that said user has RI Terminating services marks, to make it possible to differentiate the RI Terminating service provided to the user of the called terminal depending on the type of access network for the called terminal.

9. TAS according to Claim 8, **characterized in that** said unit (2D) for differentiating RI Terminating services is configured to trigger or not trigger said RI Terminating service depending on said type of access network.

10. TAS according to Claim 8, **characterized in that** said unit (2D) for differentiating RI Terminating services is configured to systematically trigger the RI Terminating service by sending, to the platform for handling the RI service, the type of access network for the called terminal, the platform being configured to implement a logic of said service, which logic is differentiated depending on said type of access network.

11. System comprising:
- a TAS according to Claim 10; and
- an RI platform configured to implement a logic of said Terminating service depending on the type of access network received from said TAS.

12. Computer program (PROG) comprising instructions for executing the steps of a method for handling calls according to any one of Claims 1 to 7 when said program is executed by a computer.

13. Computer-readable storage medium on which a computer program is stored comprising instructions for executing the steps of the method for handling calls according to any one of Claims 1 to 7.
